Europäisches Patentamt

(19) European Patent Office

Office européen des brevets

(11) Publication number: **0 289 135 B1**

# EUROPEAN PATENT SPECIFICATION

(12)

(45) Date of publication of patent specification :
**11.12.91 Bulletin 91/50**

(51) Int. Cl.⁵ : **G11B 5/55, H02K 37/22,**
**F16C 27/04**

(21) Application number : **88302712.0**

(22) Date of filing : **25.03.88**

(54) **Bi-compliant rotor stepper motor for an actuator in disc drives.**

(30) Priority : **30.03.87 US 31904**

(43) Date of publication of application :
**02.11.88 Bulletin 88/44**

(45) Publication of the grant of the patent :
**11.12.91 Bulletin 91/50**

(84) Designated Contracting States :
**AT BE CH DE ES FR GB GR IT LI LU NL SE**

(56) References cited :
**EP-A- 0 128 650**
**DE-A- 1 400 313**
**DE-U- 1 788 708**
**US-A- 4 163 996**
**US-A- 4 456 937**
**US-A- 4 682 255**

(56) References cited :
**PATENT ABSTRACTS OF JAPAN, vol. 7, no.**
**274 (P-241)[1419], 7th December 1983; & JP - A**
**- 58 153 275 (NIPPON DENKI K.K.) 12-09-1983**
**PATENT ABSTRACTS OF JAPAN, vol. 8, no. 55**
**(P-260)[1492], 13th March 1984; & JP - A - 58**
**203 674 (DENSHI KEISANKI KIHON) 28-**
**11-1983**

(73) Proprietor : **SEAGATE TECHNOLOGY, INC.**
**920 Disc Drive**
**Scotts Valley, California 95066 (US)**

(72) Inventor : **Ghose, Sanjoy**
**219 Archer Drive**
**Santa Cruz California 95060 (US)**

(74) Representative : **Bayliss, Geoffrey Cyril et al**
**BOULT, WADE & TENNANT 27 Furnival Street**
**London EC4A 1PQ (GB)**

## Description

This invention relates generally to an improved motor for driving the head positioning assembly in a disc drive apparatus, and more particularly to a motor that has its rotor and drive shaft supported to diminish radial deflection of the shaft while permitting small axial deflections.

DE-U-1788708 discloses a universally flexible mounting for a shaft in which a roller bearing is mounted on the shaft and is supported at its outer race by a rim type retainer which is braced against a guide housing via an annular support body of elastic material which braces the retainer against the guide body and allows limited axial movement of the shaft relative to the housing and also radial movement.

Disc drive machines record and reproduce information stored on concentric circular tracks recorded on magnetic discs. Tracks are written and read by magnetic heads that cooperate with the surface of the disc. Such systems in a typical popular version utilize a band drive to convert rotary motion of a stepper motor shaft to linear motion of a carriage which moves the heads mounted on the carriage radially across the disc to record and read adjacent concentric circular tracks. The drive band is wrapped around a motor shaft or a pulley attached to the shaft and has its ends attached to the carriage ; rotation of the shaft wraps one end of the band on the pulley while unwrapping the other, causing the carriage to move linearly. Guide means are associated with the carriage to guide the carriage in its linear travel to insure that the heads move radially across the associated disc.

A new track is recorded at each step of the stepper motor. The spacing of the tracks is dependent upon the amount of rotation that the motor shaft undergoes with each step and the diameter of the pulley upon which the band is wound.

In the digital magnetic recording field, there is a demand for greater storage capability. Therefore, it is desirable to minimize the spacing between tracks and yet be able to recover the stored information by being able to locate a particular track for retrieval or writing. Even the small radial deflection of the motor drive shaft which may occur in use of the motor because of the radial pressure against the drive shaft caused by the band drive and the tolerances allowed for motor assembly and the wear of components can be as much as 200 microinches. This deflection load characteristic uses up the entire allowable margin for mistracking. It is therefore highly desirable to more tightly bond the motor drive components in place to minimize the radial deflection of the drive shaft relative to the original alignment position of the shaft.

Therefore, an objective of this invention is to provide a stepper motor for a disc drive with an optimum level of repeatability of positioning of the head by the carriage.

This problem becomes apparent in motors which are heavily loaded or otherwise modified to prevent radial deflection of the shaft ; large hysteresis problems can occur if the band is not perfectly aligned with the direction of motion of the carriage. A small misalignment can cause binding of the bearings or band breakage because of large forces generated due to lack of colinearity of the bands with the direction of motion at the ends of the stroke.

Therefore, it is an objective herein to provide a motor which includes means for inherently adjusting to small misalignment problems which may occur between the band and the direction of travel of the carriage.

This invention is especially significant because prior art attempts to satisfy the objectives of minimizing radial deflection of the motor has been directed primarily to axial loading of the motor, or as is now disclosed and claimed in the above-identified application to minimizing the radial movement of the bearings.

An objective of this invention is to provide a technique for effectively floating the rotor, thereby permitting small motions in the axial (non-critical) direction while maintaining significant stiffness in the radial (critical) direction.

This invention provides a rotary actuator for a disc drive comprising a motor housing, a stator within the housing, a rotor movable relative to the stator and fixed to a motor shaft, ball bearings rotatably supporting said shaft, means supporting said ball bearings in a radial direction comprising a toroidal section ring of elastomer surrounding said ball bearings in the radial spacing between the motor housing and the bearings outer race, and means resiliently supporting said bearings against axial deflection thereby permitting small non-critical axial deflection of said motor shaft ; wherein said rotary actuator is a stepper motor which drives said motor shaft and in that said toroidal ring is formed of a hardened elastomer to restrain the shaft against deflection in the critical radial direction.

The following is a description of a specific embodiment of the invention reference being made to the accompanying drawings in which :

Figure 1 is an elevation view partially in section of a disc drive actuator incorporating a stepper motor and band ; and,

Figure 2 is a sectional view of a stepper motor modified in accordance with the present invention and its connections to a typical band used to position a carriage within a disc drive.

U.S. Patent 4,323,939 issued April 6, 1982, entitled HARD FIXED DISC DRIVE ASSEMBLY AND READ/WRITE HEAD ACTUATOR and assigned to a common assignee describes a disc drive apparatus in which the present invention is useful ; further details of the head positioning disc drive assembly may be found in U.S. Patent 4,456,937 issued June 6, 1984, and assigned to a common assignee.

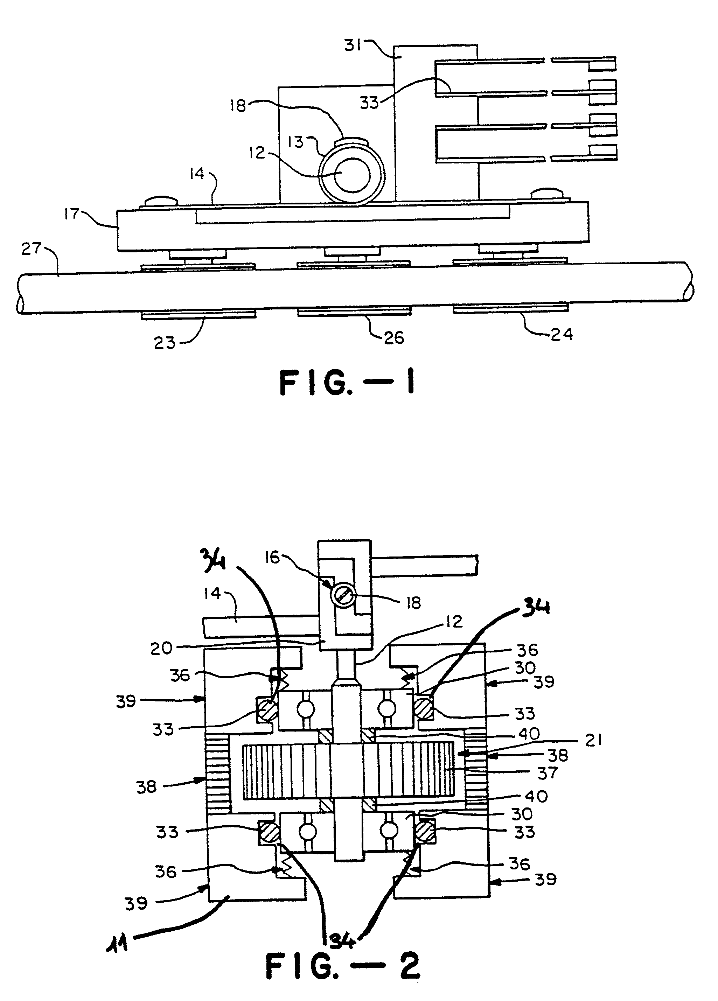

Referring to Figure 1, the head actuator used in the disc drive and read/write head assembly is seen to comprise a stepper motor 10 having a drive shaft 12, and a pulley 13 carried at one end of the shaft 12 and adapted to receive a drive band 14. Band 14 includes a center portion secured by a screw 18 to the center of the pulley 13 that rotates on the drive shaft 12 of the motor 10. The other ends of the drive band are attached to the carriage 17. Rotation of the pulley 13 clockwise or counter-clockwise winds and unwinds band portions on and off the pulley to move the carriage 17 and thereby the supported transducers relative to tracks on the discs 21.

Clearly, the open loop stepper motors typically used in these applications such as band actuator disc drives can have hysteresis problems if the band 14 is not perfectly aligned with the direction of motion of the carriage. Small misalignments can cause binding of the bearings within the motor, or band breakage because of large forces generated due to lack of colinearity at the ends of the stroke. This lack of colinearity puts significant shearing forces on the ends of the band 14 that are attached to the carriage 17, frequently resulting in band breakage. Therefore, this invention presents a technique for floating the rotor, permitting small motions in the axial (non-critical) direction while maintaining large stiffness in the radial (critical) direction. That is, the stepper motor as modified according to this invention is very flexible in the axial direction, and very stiff in the radial direction. As presently implemented in a preferred embodiment, the invention comprises an improvement over the above-incorporated application of Mr. Reim, et al. A stepper motor 10 such as is commonly employed in disc drives is shown in Figure 2. Within motor housing 11, the motor rotor generally indicated at 37 is carried on a shaft 12 onto which are fixed the inner races of two bearings 30. Two spacer rings 40 serve to locate the rotor 37 on the shaft 12. The outer race of each of the bearings 30 is mounted in an endbell 39 ; the stator 38 is clamped between the endbells 39. The stepper motor is modified by drilling a channel in both of the end bells of the housing of the motor. Then the inner race of each of the bearings 30 is press fitted to the shaft 12.

After that step, preload springs 36 are installed between the ends of each of the bearings 30 and the inner wall of the end bells 39 of the motor housing. Finally, elastomer 33 is injected into the motor end bells in channels 34 to support the outer race of the bearings 30. This injected elastomer 33, forms rings surrounding the outer race of the bearings, and fills the space defined by the channels 34 between the motor housing 11 and the motor bearing.

The operation of the device is as follows : the elastomer 33 between the outer races of the bearings 30 and the inner wall of the end bells 39 prevents radial deflection of the rotor due to any applied force from the band or to the shock and vibration. This is because the elastomer is captured in the channel 34 in the end bell 39 ; therefore the outer race of the bearing 30 which defines one side wall of the channel 34 is held very stiffly in the radial direction. However, the rotor 37 can move in the axial direction in response to axially applied loads. This is because the elastomer 33 permits small axial motions ; the two pre-load springs 36 oppose the applied loads to prevent excessive motion. Therefore, the rotor 37 can move in the axial direction to compensate for any misalignment or runout in the band and pulley system.

Without a floating rotor of the type described above, any misalignment results in binding of the rotor in the bearings, and consequently much higher hysteresis and wear.

In addition, since by using this invention the band and the arm will no longer be opposing each other, it is apparent that band end breakage due to misalignment will be considerably reduced in the present invention. The band will move the motor rotor to the axial location to minimize misalignment. Therefore, the opportunity for accurate alignment between the band and the motor to which it is attached is maximized.

## Claims

1. A rotary actuator for a disc drive comprising a motor housing (11), a stator (38) within the housing (11), a rotor (37) movable relative to the stator (38) and fixed to a motor shaft (12), ball bearings (30) rotatably supporting said shaft (12), means (33) supporting said ball bearings (30) in a radial direction comprising a toroidal section ring (33) of elastomer surrounding said ball bearings filling the radial spacing (34) between the motor housing (39) and the bearings outer race (30), and means (36) resiliently supporting said bearings (30) against axial deflection thereby permitting small non-critical axial deflection of said motor shaft (12) ; characterised in that said rotary actuator is a stepper motor which drives said motor shaft (12) and in that said toroidal ring (33) is formed of a hardened elastomer to restrain the shaft against deflection in the critical radial direction.

2. A rotary actuator as in Claim 1, characterised in that said resilient support means comprise springs (36) adjacent the outer end of said ball bearings (30) at either end of said rotor.

3. A rotary actuator as claimed in Claim 1 or Claim 2, characterised in that the motor shaft (12) is supported by axially spaced ball bearings (30) each resiliently supported against axial deflection and supported in the radial direction by said hardened elastomer toroidal section ring (33).

4. A rotary actuator as claimed in any of Claims 1 to 3, characterised in that the motor shaft (12) is coupled to a band (14) to drive a carriage (17) for positioning at least one magnetic head relative to a disc having radially spaced data tracks thereon.

5. A rotary actuator as claimed in any of the preceding claims, characterised in that said means for resiliently supporting said bearings (30) comprise preloaded springs (36) located between outer races of said bearings (30) and end bell walls (39) of said housing (11).

### Patentansprüche

1. Drehbetätigungsorgan für einen Plattenantrieb
— mit einem Motorgehäuse (11),
— mit einem Stator (38) in dem Gehäuse (11),
— mit einem Rotor (37), der relativ zu dem Stator (38) beweglich und an einer Motorwelle (12) festgelegt ist,
— mit Kugellagern (30), welche die Welle (12) drehbar lagern,
— mit Einrichtungen (33), welche die Kugellager (30) in einer radialen Richtung abstützen und einen Toroidquerschnittsring (33) aus Elastomer aufweisen, der die Kugellager (30) umgibt und den radialen Raum (34) zwischen dem Motorgehäuse (39) und dem Außenring (30) der Lager füllt und
— mit Einrichtungen (36), welche die Lager (30) elastisch gegen eine axiale Biegung abstützen, wodurch sie eine kleine, nicht kritische axiale Biegung der Motorwelle (12) gestatten, dadurch **gekennzeichnet,**
— daß das Drehbetätigungsorgan ein Schrittmotor ist, welcher die Motorwelle (12) antreibt und
— daß der Toroidring (33) aus einem gehärteten Elastomer hergestellt ist, um die Welle von einer Biegung in der kritischen radialen Richtung abzuhalten.

2. Drehbetätigungsorgan nach Anspruch 1, dadurch **gekennzeichnet,** daß die elastischen Abstützeinrichtungen Federn (36) angrenzend an das äußere Ende der Kugellager (30) an jedem Ende des Rotors aufweisen.

3. Drehbetätigungsorgan nach Anspruch 1 oder Anspruch 2, dadurch **gekennzeichnet,** daß die Motorwelle (12) von axial im Abstand angeordneten Kugellagern (30) gelagert ist, von denen jedes elastisch gegen eine axiale Biegung abgestützt und in der radialen Richtung durch den gehärteten elastomeren Toroidquerschnittsring (33) gehalten ist.

4. Drehbetätigungsorgan nach einem der Ansprüche 1 bis 3, dadurch **gekennzeichnet,** daß die Motorwelle (12) mit einem Band (14) gekoppelt ist, um einen Schlitten (17) zum Positionieren wenigstens eines Magnetkopfs bezüglich einer Platte anzutreiben, auf der radial im Abstand angeordnete Datenspuren vorhanden sind.

5. Drehbetätigungsorgan nach einem der vorhergehenden Ansprüche, dadurch **gekennzeichnet,** daß die Einrichtungen für die elastische Abstützung der Lager (30) vorgespannte Federn (36) aufweisen, die zwischen äußeren Laufringen der Lager (30) und stirnseitigen Glockenwänden (39) des Gehäuses (11) angeordnet sind.

### Revendications

1. Actionneur rotatif pour une unité de disques, comportant un boîtier (11) de moteur, un stator (38) à l'intérieur du boîtier (11), un rotor (37) mobile par rapport au stator (38) et fixé à un arbre (12) de moteur, des paliers à billes (30) supportant en rotation ledit arbre (12), des moyens (33) supportant lesdits paliers à billes (30) dans une direction radiale, comprenant une bague (33) de section toroïdale en élastomère entourant lesdits paliers à billes (30) et occupant l'espace radial (34) entre le boîtier (39) du moteur et la bague extérieure (30) des paliers, et des moyens (36) supportant élastiquement lesdits paliers (30) contre une déviation axiale, permettant ainsi une petite déviation axiale non critique dudit arbre (12) du moteur ; caractérisé en ce que ledit actionneur rotatif est un moteur pas à pas qui entraîne ledit arbre (12) du moteur et en ce que ladite bague toroïdale (33) est formée d'un élastomère durci pour s'opposer à une déviation de l'arbre dans la direction radiale critique.

2. Actionneur rotatif selon la revendication 1, caractérisé en ce que lesdits moyens élastiques de support comprennent des ressorts (36) adjacents à l'extrémité extérieure desdits paliers à billes (30) à chaque extrémité dudit rotor.

3. Actionneur rotatif selon la revendication 1 ou la revendication 2, caractérisé en ce que l'arbre (12) du moteur est supporté par des paliers à billes (30) espacés axialement, supportés chacun élastiquement contre une déviation axiale et supportés dans la direction radiale par ladite bague (33) de section toroïdale en élastomère durci.

4. Actionneur rotatif selon l'une quelconque des revendications 1 à 3, caractérisé en ce que l'arbre (12) du moteur est couplé à une courroie (14) pour entraîner un chariot (17) afin de positionner au moins une tête magnétique par rapport à un disque portant des pistes de données espacées radialement.

5. Actionneur rotatif selon l'une quelconque des revendications précédentes, caractérisé en ce que lesdits moyens destinés à supporter élastiquement lesdits paliers (30) comprennent des **ressorts** préchargés (36) placés entre des bagues extérieures desdits paliers (30) et des parois extrêmes évasées (39) dudit boîtier (11).

FIG. — 1

FIG. — 2